# EUROPEAN PATENT APPLICATION

(11) **EP 1 294 202 A1**
(43) Date of publication of application: **19.03.2003**
(21) Application number: 01307946.2
(22) Date of filing: 18.09.2001
(51) Int. Cl.: H04Q 7/22, H04L 12/56

(54) **A method of sending data packets through a MPLS network, and a MPLS network**

(71) Applicant: LUCENT TECHNOLOGIES INC., Murray Hill, New Jersey 07974-0636 (US)
(72) Inventor: Chen, Xiaobao, Swindon, Wiltshire SN5 5DQ (GB); Richards, Derek, Swindon, Wiltshire SN6 6LL (GB)
(74) Representative: Sarup, David Alexander

(57) **Abstract**

A method of sending data packets through a Multiple Protocol Label Switching MPLS network is provided. It comprises assigning to each packet a quality of service (QoS) class flag, then routing each packet through the MPLS network dependent on the QoS class flag assigned.

## Description

### Technical Field

The present invention relates to a method of sending data packets through a Multiple Protocol Label Switching MPLS network, and a Multiple Protocol Label Switching MPLS network.

### Background of the Invention

Existing Universal Mobile Telecommunications System (UMTS) Quality of Service (QoS) relies upon the use of DiffServ at the IP transport bearer level for QoS differentiation and control. The UMT QoS is indicated and distinguished by using four UMTS QoS classes: Conversational, Streaming, Interactive and Background Classes. They are then further mapped to DiffServ code points (DSCPs), which are then used at the Internet Protocol (IP) transport bearer where the IP traffic that carries the UMTS traffic are differentiated by checking the DiffServ code point (DSCP) carried at the header of each IP packet and providing different Per-hop delivery behaviour.

The use of DiffServ solely at the IP bearer level that carries the UMTS QoS Classes does not provide some essential features such as QoS constraints-based routing, explicitly routing and traffic engineering that are important to UMTS QoS differentiation with flexible control imposed by the operators to their service/commercial needs. Traffic engineering denotes mechanisms to manage traffic so as to avoid congestion, and saturation at a receiver.

Moreover, as DiffServ-based QoS control applies at the IP level, this imposes the requirements of QoS inter-working with other non-DiffServ QoS control mechanisms such as IntServ, Resource reSerVation Protocol (RSVP), ATM QoS control, etc. This often involves complicated inter-working procedures and protocol conversion.

QoS provisioning at the IP Level always involves the traffic classification and differentiation by checking the IP header information and all other layer-3 information such as routing information. This "upward-and-then-downward" protocol header processing and the whole-length header-examination inevitably incur high control overhead and cause transmission and control in-efficiency.

In summary, current UMTS QoS mandates the use of DiffServ as the underlying IP transport QoS differentiation scheme.

### Summary of the Invention

The present invention provides a method of sending data packets through a Multiple Protocol Label Switching MPLS network comprising assigning to each packet a quality of service (QoS) class flag, and routing each packet through the MPLS network dependent on the QoS class flag assigned.

Advantages of the present invention in its preferred embodiments that UMTS QoS provisioning is achieved by deploying the fast-switching capability of MPLS in combination with explicit UMTS QoS-oriented categories of forwarding equivalent class (FEC). Furthermore, due to the short header of MPLS in comparison with the length IP header and the layer-two label swapping and potential effective header compression, the transmission efficiency is greatly improved . This is extremely beneficial to 3^{rd} Generation and any other wireless networks where resources, in particular, the radio resources are often very scarce and expensive. As result, efficient utilisation can become the factor of a service being deployable or not. Furthermore, due to the feature rich capability of MPLS such as explicit routing (unavailable in DiffServ) as well as hop-by-hop routing, QoS/Resource constraints routing, and effective control of bearers for traffic engineering, it enables to an operator to closely monitor, control and dynamically updates the its existing MPLS configuration to meet its customer/business requirements. It also provides an effective way for combining the virtual private network (VPN) provisioning with QoS. Furthermore, MPLS is a technology that applies to all-layer 2 technologies, such as ATM, Frame Relay, Ethernet, etc, the introduction of MPLS for supporting UMTS QoS will greatly facilitate QoS inter-working function which is essential for end-to-end QoS control.

Preferably the QoS classes comprise at least one class which guarantees that no packets of this class will be dropped should network congestion occur, and preferably comprise at least one class which guarantees that no more than a predetermined proportion of packets of this class will be dropped should network congestion occur.

Preferably the QoS classes comprise at least one class which guarantees that all packets of this class will be received within a predetermined delay, and preferably comprise at least one class which guarantees that no less than a predetermined proportion of packets of this class will be received within a predetermined delay.

Preferably of a first class (GD FEC) no packets shall be dropped and delay will be no more than a predetermined limit for 100% of the packets in the first class. Preferably of a second class (DS_FEC) no more than a predetermined proportion of the packets of the second class shall be dropped and delay will be no more than a predetermined limit for a predetermined proportion of the packets in the second class, Preferably of a third class (DIS_FEC) no more than a predetermined proportion of the packets of the third class shall be dropped but there is no limit set as possible delay. Preferably of a fourth class (BE_FEC) no limit is set either for the proportion of the packets which shall be dropped or for the delay of any packet of the fourth class.

Preferably for each packet the class is flagged in the EXP field of the MPLS header attached to the data packet and preferably routing is undertaken according to the E-LSP scheme.

Preferably the packets are DiffServ Internet Protocol IP packets. Preferably, the above QoS-oriented FEC Classes are mapped to DiffServ Scheduling Classes which are then carried either by the EXP field (E LSP scheme) or represented by the label (L LSP). This is to support DiffServ QoS over MPLS.

Preferably the MPLS network is within a Universal Mobile Telephone Service network.

The present invention also provides a Multiple Protocol Label Switching MPLS network comprising means to assign to each packet a quality of service class flag, and one or more routers operative to route each packet through the MPLS network dependent on the QoS class flag assigned.

The present invention also provides a Universal Mobile Telecommunications System UMTS network comprising the MPLS network. Preferably the MPLS network comprises a MPLS bearer service manager operative to route the data packets between UMTS terrestrial radio access network (UTRAN) and core network edge node, and between core network edge node and gateway GPRS support node (GGSN). Furthermore preferably the manager is above layer-2 of a protocol stack. Furthermore preferably the manager is at layer-3 of the protocol stack.

### Brief Description of the Drawings

A preferred embodiment of the present invention will now be described by way of example and with reference to the drawings, in which:
Figure 1 is a diagrammatic illustration of an MPLS network
Figure 2 is a diagrammatic illustration of an MPLS packet header,
Figure 3 is a diagrammatic illustration of supporting UMTS Bearer QoS in UMTS core network (CN),
Figure 4 is a diagrammatic illustration of supporting UMTS radio access bearer (RAB) QoS in UTRAN, and
Figure 5 is a diagrammatic illustration of Quality of Service management functions in a UMTS mobile telecommunications system

### Detailed Description

This development concerns using Multiple Protocol Label Switching (MPLS) to enhance the Universal Mobile Telecommunications System (UMTS) quality of service QoS.

In simple terms a mechanism is proposed to enhance UMTS QoS provisioning and simplify the QoS inter-working function as well as improve control/transmission efficiency by introducing MPLS as the layer-3 QoS enhancement layer. This introduces MPLS Resource Manager in the UMTS QoS Management Architecture that categorises IP DiffServ packets into four QoS-oriented Forwarding Equivalent Class (FEC)categories: guaranteed delivery (GD_FEC), delay sensitive (DS_FEC), delay insensitive (DIS_FEC), and best effort(BE_FEC). It then selects and sets up the appropriate label switched path (LSP) (E-LSP or L-LSP) for delivering the MPLS frames that will be treated across the label edge router (LER)/label switch path (LSP) according to the specific QoS requirements indicated by each specific forwarding equivalent class (FEC). As is known in MPLS, E-LSP denotes Experimental-field-inferred per-hop-behaviour scheduling class label-switched-path, and L-LSP denotes Label-inferred per-hop-behaviour scheduling class label-switched-path. At each label switched router (LSR), the whole IP header needs not be examined to retrieve the DiffServ QoS information; which consequently improves the control and transmission efficiency. In addition, the MPLS Resource Manager also deploys Customer/Operator defined routing/re-routing policies to meet QoS constraints and provides dynamic control for fault tolerance.

To paraphrase, as will be described in more detail below, a modification of existing UMTS QoS control infrastructure is proposed which introduces using four new categories of Multiple Protocol Label Switching (MPLS) Forwarding Equivalent Class (FEC): guaranteed delivery (GD_FEC), delay sensitive (DS_FEC), delay insensitive (DIS_FEC), and best effort(BE_FEC). Considering these in turn:
GD_FEC provides a hard guarantee of QoS, in particular that no packets will be dropped (100% reliability) and delay will be no more than a preset bound for 100% of the packets in this class.
DS_FEC provides a soft guarantee of QoS, in particular, it guarantees both the reliability and delay bound for no less than X% of the packets, where Xis a predetermined percentage.
DIS_FEC provides soft guarantee of QoS, in particular, it guarantees the reliability for no less than P%, but gives no guarantee as to possible delay.
BE_FEC provides no guarantee of QoS, in particular, it guarantees neither the reliability or the delay for any packet that has been sent.
These classes are supported by using either or both of (E-LSP) and L-LSP of MPLS to support UMTS QoS with explicit routing/hop-by-hop routing, QoS constraints-based resource management and traffic engineering. An explicit mapping relationship between the UMTS QoS, DiffServ code point (DSCP) and MPLS forwarding equivalent class (FEC) to E-LSP and L-LSP will be described.

### Why MPLS in UMTS for QoS and Comparison with DiffServ

### (a) Path Oriented QoS provisioning: Using Explicitly Routed label switched path (LSP) Tunnels

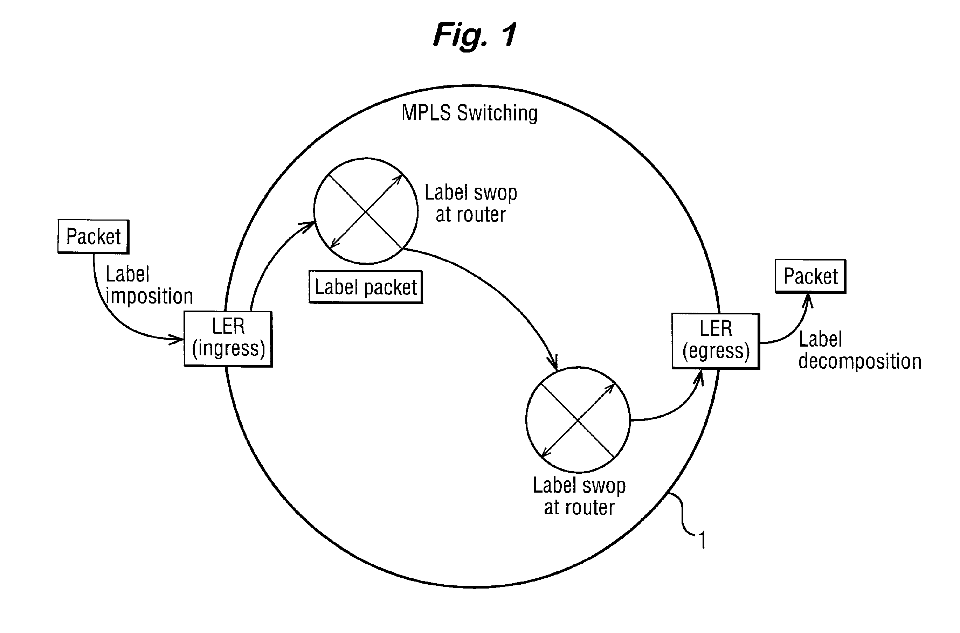

As shown in Figure 1, MPLS switching, as described for example in "MPLS and Label Switching Networks" by Uyless Black, Prentice Hall Publishers, Upper Saddle River NJ07458 USA, ISBN 0-13-015823-2, involves routing a packet through a network 1 by appropriate label switching. Upon entering the network at the LER(ingress), a data packet is provided with a first MPLS header. The packet is directed through the network to the Label Edge Router LER(egress) as a sequence of hops between intermediate (or Transit) Label Switched Routers (LSRs). At each router a new MPLS header is applied in place of the old one, the new MPLS header including an appropriate address to the next router for the next hop. At the LER(egress) the latest MPLS header is removed.

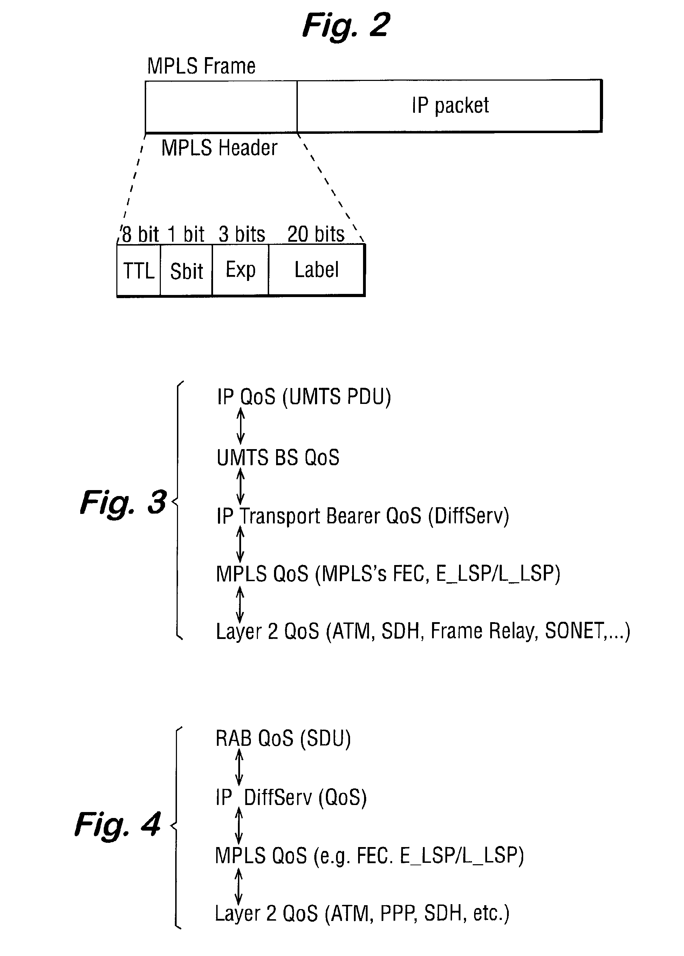

As shown in Figure 2, each MPLS header has a format consisting of the following four fields:
Label (20bits)
Experimental Use (3 bits) (use not fully defined)
Stacking Bit (1bit) (known as the S-bit)
TTL (8bits) (denotes time to live-limits how many hops the MPLS packet can traverse).

MPLS is path-oriented so it can provide faster and more predictable protection and restoration capabilities in the face of topology changes than conventional hop by hop routed IP systems. This is sometimes called "MPLS Protection".Each label switched path (LSP) can be associated with certain path set up and management polices and protection control. Therefore they may offer different levels of protection to the traffic following different label switched paths (LSP)s. Two typical use of pre-defined or pre-selected label switched path (LSP) includes policy routing and traffic engineering.

Service providers and the network operators need to have strict control of and monitor of the network behaviour and the achievable network performance and the forwarding treatment of user traffic. Moreover, by configuring and choosing label switched paths (LSP) with different forwarding equivalent class (FEC), the service provider and the network operators have the flexibility of different levels of "QoS Protection", "Privacy/Security Protection". This is particularly important to an UMTS infrastructure using the same DiffServ configuration that is shared by multiple service providers and the operators that prefer different levels of "QoS and Privacy/Security Protections".

Some classes of service can be supported by label switched paths (LSPs) which are protected while some other classes of service are supported by LSPs which are not protected.

### (b) Comparison between MPLS and DiffServ:

DiffServ allows the use of Hop by Hop Route with limited separation/differentiation and thus limited protection from each other between micro flows/behaviour aggregates (BA). In supporting QoS differentiation, DiffServ offers the same level of QoS protection to the same BA (Behaviour Aggregate) bearing the same DSCP for all Service providers' traffic. The QoS differentiation is based on the per hop behaviour (PHB) that applies to each hop the traffic flows through.

On the other hand, MPLS allows both Hop by Hop Path and Explicitly Routed Path to be supported. As regards the use of Hop by Hop Path, MPLS Hop by Hop Path requires that a certain label be forwarded along the same hop-by-hop route path that would be used for forwarding a packet with specified address in its network layer destination address field so that the packets are routed hop by hop (by deciding the next hop by finding the longest match between the address prefix of the packet and that in the routing table) following the same path as defined by the label switched path (LSP) set up by the distribution of the label. In this case, a Forwarding Equivalent Class (FEC) can be identified with an address prefix.

As regards the use of Explicitly Routed Path, in some scenarios, the network operators/administrators desire to forward certain classes of traffic along prespecified paths to support policy routing, or traffic engineering. The explicit route may be a configured one, or it may be determined dynamically by some means, e.g., by constraint-based routing.

As regards supporting QoS differentiation, an MPLS forwarding equivalent class (FEC) can support up to eight behaviour aggregates (BAs) by using the EXPerimental (field) inferred Per hop behaviour (PHB) Scheduling Class (PSC) Label Switched Path (LSP) (denoted E-LSP), where the PSC (such as assured forwarding AF1x, expedited forwarding (EF)) and the drop precedence are derived from the EXP bits in the MPLS header. The mapping from the EXP to the per hop behaviour (PHB) is either explicitly signalled at label set-up or relies on a pre-configured mapping.

### 3. Supporting UMTS QoS using MPLS

The mapping of UMTS QoS Classes to MPLS forwarding equivalent classes (FECs) will be described later.

### (a) The label switched path (LSP) Selection for supporting IP QoS/DiffServ:

In DiffServ, the DiffServ code point (DSCP) determines the selection of per hop behaviours (PHBs) that define how packets are forwarded at each DiffServ router. It also defines the set of behaviour aggregates (BAs) that order the sequence in which packets are processed. DiffServ therefore also defines the set of one or more per hop behaviours (PHBs) that are applied to this set (Ordered Aggregate,OA)

To support DiffServ, the network administrator/operators must decide if the sets of behaviour aggregates (BAs) are mapped onto the same label switched path (LSP) or different label switched path (LSPs) in one of two ways: E-LSP and L-LSP. This gives more flexibility to the service providers and operators.

This allows the MPLS network administrator to select how Diff-Serv Behavior Aggregates (BAs) are mapped onto Label Switched Paths (LSPs) so that he/she can best match the Diff-Serv, Traffic Engineering and protection objectives within his/her particular network.

This solution relies on combined use of two types of label switched paths (LSP)s: Firstly LSPs which can transport multiple Ordered Aggregates, so that the EXP field of the MPLS header conveys to the label switched router (LSR) the per hop behaviour (PHB) to be applied to the packet (covering both information about the packet's scheduling treatment and its drop precedence). Secondly label switched path (LSPs) which only transport a single Ordered Aggregate, so that the packet's scheduling treatment is inferred by the label switched router (LSR) exclusively from the packet's label value while the packet's drop precedence is conveyed in the EXP field of the MPLS Header or in the encapsulating link layer specific selective drop mechanism (ATM, Frame Relay, 802.1).

As regards the first approach, namely using EXP Inferred PSC LSP (E-LSP),for each incoming packet at an label switched router (LSR), the PSC is determined hop by hop (each label switched router (LSR)) by looking at the EXP field of the MPLS header. Multiple PSC's are supported by one E-LSP. A single label switched path (LSP) can be used to support one or more ordered aggregate (OA)s. Such label switched path (LSPs) can support up to eight behaviour aggregates (BAs) of a given forwarding equivalent class (FEC), regardless of how many ordered aggregates (OAs) these BAs span. The EXP (the experimental bits) field in MPLS header is used by the label switched router (LSR) to determine the per hop behaviour (PHB) to be applied to the packet. This includes both PSC (PHB Scheduling Class such as assured forwarding AF1x, expedited forwarding (EF)) and Drop Precedence (the precedence with which packets will be discarded where congestion occurs). The mapping from EXP field to per hop behaviour (PHB) (ie to PSC and drop precedence) for a given such label switched path (LSP), is either explicitly signaled at label set-up or relies on a pre-contigured mapping.This is called E-LSP.

As regards the second approach Label-Only-Inferred-PSC LSPs (L-LSP): For each incoming packet at an label switched router (LSR), the PSC is determined to be associated with a label switched path (LSP) during the LSP establishment and thus the PSC is decided by looking at the MPLS Label. It provides finer granularity. Single PSC is supported by one L-LSP. A separate label switched path (LSP) can be established for a single <FEC, ordered aggregate (OA)> pair. The PSC is explicitly signaled at label establishment time so that, after label establishment, the label switched router (LSR) can infer exclusively from the label value the PSC to be applied to a labeled packet. The Drop precedence is carried by using the EXP. Field.The network administrator selects the actual combination of label switched path (LSPs) from the set of allowed combinations and selects how the Behavior Aggregates are actually transported over this combination of label switched path (LSP)s, in order to best match his/her environment and objectives in terms of Diff-Serv support, Traffic Engineering and MPLS Protection. MPLS allows (but does not require) the precedence or class of service to be fully or partially inferred from the label. In this case, one may say that the label represents the combination of a forwarding equivalent class (FEC) and a precedence or class of service.

### (b) QoS Resource (Bandwidth) Reservation in DiffServ over MPLS:

E-ESP's and L-LPS's may be established with or without bandwidth reservation. Establishing an E-LSP or L-LSP with bandwidth reservation means that bandwidth requirements for the label switched path (LSP) are signalled at label switched path (LSP) establishment time. Such signalled bandwidth requirements may be used by label switched routers (LSRs) at establishment time to perform admission control of the signalled label switched path (LSP) over the DiffServ resources provisioned for the relevant PSC(s). This signalled resource reservation can also be used to adjust the DiffServ resources such as the scheduling weight for a PSC (assured forwarding AF1x vs. AF2x and AF3x, AF4x). For L-LSP on the one hand, the resource reservation only applies to one PSC for admission control and resource adjustment at each label switched router (LSR). On the other hand, for E-LSP, the signalled bandwidth is associated collectively to the whole label switched router (LSR) and therefore to the set of transported PSC's. Thus, label switched router (LSRs) that usethe signalled bandwidth to perform admission control may perform admission control over global resources which are shared by the set of PSC's (e.g. over the total bandwidth of the link).

### (c) Implication to UMTS of support using MPLS

Use of MPLS in a UMTS system provides:
1) Flexibility and finer service and QoS granularity by using MPLS Hop by Hop routed path, Explicitly Routed Path, E-LSP and L-LSP.
2)Policies-enabled QoS provisioning and traffic engineering as well as user/operator-oriented service isolation and protection.
3)MPLS serving as a convergence layer for both upper layer (IP layer) and the lower layer (Layer two). Each integration and greater interoperability with different network transport bearers such as ATM, Framework Relay, PPP, SDH, Ethernet, etc.
4) Extra control complexity for the management of MPLS resources (e.g. E-LSP, L-LSP,forwarding equivalent class (FEC), Mapping, selection, etc.)

### 4. Implementation of UMTS QoS over MPLS

Due to the mandatory support of DiffServ at the IP transport bearer level on the core network (CN) bearer and interface Iu bearer in UMTS and open choice of DiffServ for IP bearer at the Iub and Iur interfaces in UTRAN, two main categories exist for supporting UMTS QoS:
(a) Supporting UMTS Bearer QoS in UMTS core network (CN) Gateway GPRS support node (GGSN) and Serving GPRS support node (SGSN), the interfaces between GGSN and SGSN (Gn, Gp), and Iu-ps interface. Five Levels of mapping exist as shown in Figure 3.
(b) Supporting UMTS radio access bearer (RAB) QoS in UTRAN: Four levels of mapping exist as shown in Figure 4.

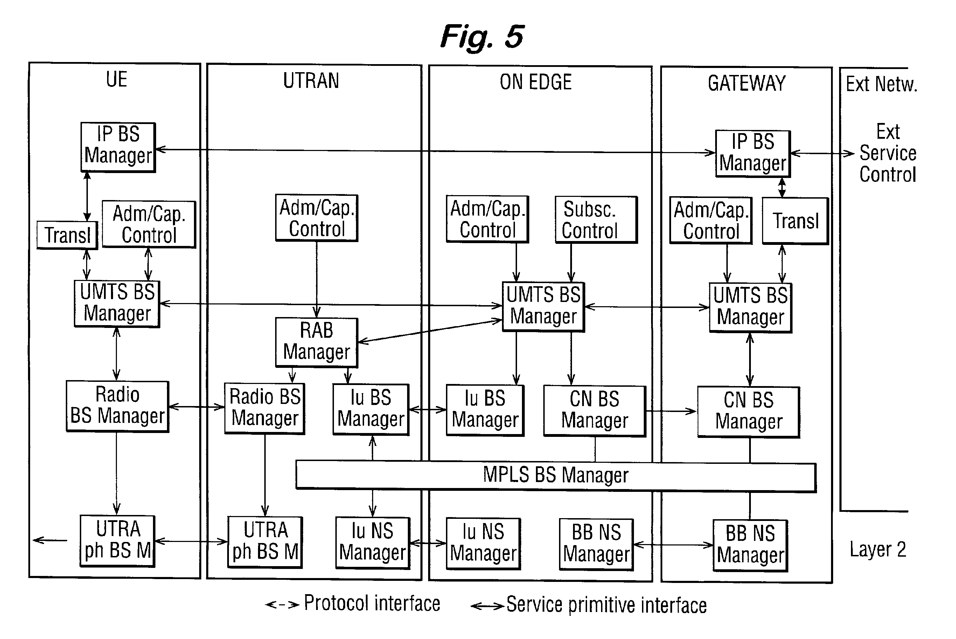

The QoS Management framework is shown in Figure 5.

As shown in Figure 5, the IP bearer service (BS) QoS is handled by the IP bearer service (BS) Manager. The UMTS bearer service (BS) QoS is handled by UMTS bearer service (BS) Manager. The radio access bearer (RAB) QoS is handled by the RAB Manager in association with the RB Managers. The QoS on interface Iu is handled by interface Iu bearer service (BS) Manager. In Figure 5, Admin/Cap denotes administration/capacity, Trans.denotes translation, Subs. denotes subscription and UTRA ph bearer service (BS) M denotes UMTS terrestrial radio access physical bearer service manager.

The Core Network Bearer Service of the UMTS core network connects the UMTS core network (CN) interface Iu Edge Node with the core network (CN) Gateway to the external network. The role of this service is to efficiently control and utilise the backbone network in order to provide the contracted UMTS bearer service. The UMTS packet core network supports different backbone bearer services for variety of QoS. For IP based backbone bearer service, the IP Transport QoS is handled by core network (CN) bearer service (BS) Manager in the core network.

The Backbone Network Service covers the layer 1/Layer2 functionality and is selected according to operator's choice in order to fulfil the QoS requirements of the Core Network Bearer Service. The Backbone Network Service is not specific to UMTS but may reuse an existing standard. The Backbone network service (NS) and the interface Iu network service (NS) handle the layer 2 QoS resources in the core network (CN) and the Iu interface.

The introduction of MPLS into UMTS requires that an intermediate sub-layer MPLS be introduced between the interface Iu bearer service (BS) Manager/core network (CN) bearer service (BS) Manager and the Backbone network service (NS)/Iu network service (NS) as the functional entity to handle MPLS resources related to the QoS control. For the purpose of making the framework be applicable to either case, a separate functional entity, MPLS bearer service (BS) Manager is introduced between the core network (CN) bearer service (BS) Manager /interface In bearer service (BS) Manager and the Backbone network service (NS)/interface Iu network service (NS) as shown in Figure 5. This improves the IP Transport bearer performance and provides a solution which is independent of the particular layer 2 protocol chosen.

The MPLS bearer service (BS) Manager is responsible for:

Mapping the QoS resources requirements and the QoS classes (e.g. the DiffServ Classes) at the core network (CN) bearer service (BS) Manager to the MPLS resources such as the forwarding equivalent classes (FEC)'s.

Selecting, setting up and configuring the MPLS label switched path (LSP) such as E-LSP or L-LSP across the MPLS label switched router (LSR) cloud between the UTRAN and core network (CN) edge Node and between core network (CN) edge node (e.g. Serving GPRS support node (SGSN)) and gateway node (e.g. gateway GPRS support node (GGSN)).

Enforcement of operators defined constraints and policies on the label switched path (LSP) before and during the traffic transmission.

Applying MPLS TE (Traffic Engineering) to guarantee the QoS and stability of the network performance.

Setting up and maintaining MPLS virtual private network (VPN) services.

Please note that the MPLS bearer service (BS) Manager may be a sub-functional entity of interface Iu network service (NS) Manager and Backbone network service (NS) Manager.

A key issue is how is the IP Transport Bearer QoS (DiffServ) is mapped to MPLS QoS and how the QoS resources of both are managed and controlled as discussed in detail below .

### (i) DiffServ PSC (Per hop behaviour (PHB) Scheduling Classes):

Three types of per hop behaviour (PHBs) are defined in the DiffServ specifications:
DiffServ defines a default per hop behaviour (PHB) in which there is no special treatment accorded to the packet.
Expedited forwarding (EF): a method in which certain packets are given low delay and low loss service. Typically these packets are regulated such that their queues are serviced at a rate in which the packets are removed from the buffer at least as quickly as packets are placed into the buffer.
Assured forwarding AF: This per hop behaviour (PHB) is a tool to offer different levels of forwarding assurances for IP packets received from a user (The Weighted Fair Queueing operations would be good tools for managing assured forwarding AF traffic).

Four assured forwarding AF classes are defined which each AF class in each DiffServ node is allocated a certain amount of forwarding resources (buffer space and bandwidth). Within each assured forwarding AF class, packets are marked ( again by the user or the service provider) with one of three possible drop precedence values. The number of assured forwarding AF per hop behaviours (PHBs) is 12.

In case of congestion, the drop precedence of a packet determines the relative importance of the packet within the assured forwarding AF class.

### (ii) UMTS Tailored MPLS forwarding equivalent classes (FEC)'s:

The Forwarding Equivalent Class decides the choice of "next hop" for an incoming packet to a label switched router (LSR). As far as the forwarding decision is concerned, different packets which get mapped into the same forwarding equivalent class (FEC) arc indistinguishable. All packets which belong to a particular forwarding equivalent class (FEC) and which travel from a particular node will follow the same path (or if certain kinds of multi-path routing are in use, they will all follow one of set of paths associated with the forwarding equivalent class (FEC).)

Therefore, one forwarding equivalent class (FEC) uniquely defines a label switched path (LSP) which may support one or more PSC's (PHB Scheduling Classes), each of which bears an DiffServ Class (such as expedited forwarding (EF), or AF1x or AF2x, ...). Therefore, one FEC with one label switched path (LSP) may achieve the same (L-LSP) or different forwarding behaviours (E-LSP) for different DiffServ packets. But the ordered aggregates (OAs) supported either by a L-LSP or E-LSP must be guaranteed, i.e. the packet orders for each DiffServ class are guaranteed.

Based on the definition of UMTS QoS Classes and the above analysis about MPLS in UMTS, four basic forwarding equivalent classes (FECs) are defined to support UMTS QoS Classes (Please note that the proposed FEC classes are not limited for use in UMTS.) These four FECs are:
Delay Sensitive FEC (DS_FEC): those forwarding equivalent classes (FECs) that are associated with the forwarding behaviours that provide delay within certain bounds. Different levels of guarantee on the packet loss rate may be provided. The packet DS_FEC may undergo low, medium or highs drop precedence.
Delay Insensitive FEC (DIS_FEC): those forwarding equivalent classes (FECs) that are associated with the forwarding behaviours that provide "better than best-effort" like services, i.e. no guarantee on the delay bound but may meet different levels of guarantee on the packet loss rate. The packets of DIS_FEC may experience low, medium or high drop precedence.
Guaranteed Delivery FEC (GD_FEC): those forwarding equivalent classes (FECs) that are associated with the forwarding behaviour that guarantees the bound of delay and packet loss.
Best-effort FEC (BE_FEC): those forwarding equivalent classes (FECs) that are associated with the forwarding behaviour that provide the best effort like service, i.e. no guarantee on the delay or packet rate. The packets of BE_FEC normally experience no specific treatment at each label switched router (LSR).

### (iii) Mapping between DiffServ PSC to MPLS forwarding equivalent classes (FECs) for UMTS:

The mapping relationship is:
Expedited Forwarding (EF) to GD_FEC.
AF1x and AF2x to DS FEC:
AF11 (001010), AF12&13 (001100, 001110)
AF21 (010010), AF22&23 (010100, 010110), to DS FEC,

For DS_FEC. AF11/AF21, AF12/AF22, AF13/AF23 features low, medium and high drop precedence, respectively.

Note: the total number of behaviour aggregates (BAs) in a DIS_FEC is six, less than maximum eight BA's that an E-LSP can support for a given forwarding equivalent class (FEC).
AF3x and AF4x to DIS FEC:
AF31(011010), AF32&33 (011100, 011110),
AF41(100010), AF42&43 (100100, 100110) to DIS FEC.

For DIS FEC, AF31/AF41, AF32/AF42, AF33/AF43 features low, medium and high drop precedence, respectively.

Note: the total number of behaviour aggregates (BAs) for a DS_FEC is six, less than the maximum eight BAs that an E-LSP can support for a given forwarding equivalent class (FEC).

The choice of AF1x and AF2x for DS_FEC and AF3x and AF4x for DIS_FEC indicate one possible mapping relationship between the AF and the forwarding equivalent class (FEC). The corresponding per hop behaviour (PHB) to AF decides the actual forwarding behaviour that relies on the implemented resource allocation and scheduling (such as buffer space and bandwidth) algorithms (such as WFQ). The mapping could be the opposite, i.e. AF1x and AF2x to DIS_FEC and AF3x and AF4x to DS_FEC if the WFQ-based
No treatment is provided for BE_FEC.

### Implications on the selection of label switched path (LSP) for ordered aggregates (OA)s/behaviour aggregates (BA)s:

An ordered aggregate (OA) is a set of behaviour aggregates (BAs) that share an ordering constraint, and DiffServ can define the set of one or more per hop behaviour (PHBs) that are applied to this set. Each DiffServ PSC has to be in the same label switched path (LSP) due to the packet order constraints over an ordered aggregate (OA) because AF packets of the same class such as AF1x (AF11, 12, 13, 14), AF2x, AF3x and AF4x must not be mis-ordered and they shall have to be on the same label switched path (LSP) so as to guarantee the packet order constraints. Therefore the behaviour aggregates (BAs) in a PSC such as AF11, A12 and A13 should ideally on the same label switched path (LSP). This implication provides the guidance over the use of E-LSP and L-LSP in UMTS.

### (iv) Using E-LSP and L-LSP in UMTS:

A label switched path (LSP) can support one PSC (using L-LSP) or multiple PSC (using E-LSP):
E-LSP: An forwarding equivalent class (FEC) that is assigned to an E-LSP is effective across up to eight behaviour aggregates (BAs) with one or more ordered aggregates (OA)'s, i.e. each E-LSP can support multiple PSC's. Based on the mapping relationships presented in (iii)above, E-LSP is best suited for services that are assigned DS_FEC and DIS_FEC. For example, an E-LSP with DS_FEC may have up to two PSC AF1x and AF2x with up to six behaviour aggregates (BAs) supported. The same applies to an E-LSP with DIS_FEC.

L-LSP: An forwarding equivalent class (FEC) that is assigned to an L-LSP is effective only to one PSC such as AF1x, expedited forwarding (EF). Therefore, the maximum number of behaviour aggregates (BAs) for a L-LSP of either DS_FEC or DIS_FEC is three, featuring different level of drop precedence.

### (v) Integrating Management of MPLS Resources (FEC, E/L-LSP) into UMTS QoS Framework

In existing UMTS QoS Framework, the IP bearer service (BS) Manager and the UMTS bearer service (BS) Manager manage the QoS resources at the IP bearer service (BS) level and the UMTS level, respectively. The management of IP transport bearer and the layer 2 underneath the GPRS/UMTS bearer have been taken to be implementation specific for maximum flexibility in deploying different transport mechanisms such as ATM, Framework, SDH, etc.

In a transport bearer independent scenario, the selection and management of MPLS E-LSP/L-LSP is implementation specific and thus independent of the QoS resource management at the UMTS bearer service (BS) Level. The management of Transport Bearer QoS resources including MPLS resources are local to the MPLS bearer service (BS) Manager (MPLS Bearer Service Manager) which is responsible for selecting, managing and admission control over the QoS resources on the transport bearer such as the selection of DiffServ code point (DSCP) for IP Bearer, E-LSP/L-LSP/FEC/... for MPLS and SVC/PVC and the QoS Classes for ATM links etc.The MPLS bearer service (BS) Manager will be responsible for mapping between the QoS between the different layers at the transport bearer level such as IP DiffServ code point (DSCP) to MPLS forwarding equivalent class (FEC).

In a transport bearer dependent scenario, the selection and management of MPLS E-LSP/L-LSP is integrated into the selection and management of IP QoS resources such as the selection of DiffServ DiffServ Code point (DSCP) and mapping to MPLS forwarding equivalent class (FEC) and resource reservation at the IP bearer service (BS) Level (e.g. using RSVP), UMTS bearer service (BS) Level (using PDP Context) and the IP Transport Bearer Level (IP DiffServ) and the MPLS Layer ( the bandwidth reservation on E-LSP/L-LSP).The IP bearer service (BS) Manager and the UMTS bearer service (BS) Manager may therefore have direct impact over the use of the QoS resources and the associated management (reservation, maintenance, release, authorisation) at the IP transport level and the lower levels, such as the IP DiffServ DiffServ code point (DSCP), MPLS FEC/E-LSP/L-LSP, ATM Classes SVC/PVC. The specific requirements over the UMTS traffic on traffic engineering and the QoS are directly linked with the control and dispatch of MPLS resources such as GD_FEC/DS_FEC/DIS_FEC/BE_FEC. Direct report and monitoring about the status of MPLS label switched path (LSP) performance allows action to be taken to remedy faults resulting in improved rerliability.

UMTS Service security requirements can be directly linked to the control and set-up of MPLS virtual private network (VPN) tunnels with appropriate operator-specific constraints and policies enforcement.

## Claims

1. A method of sending data packets through a Multiple Protocol Label Switching MPLS network comprising assigning to each packet a quality of service (QoS) class flag, and routing each packet through the MPLS network dependent on the QoS class flag assigned.

2. A method of sending data packets through a MPLS network according to claim 1, in which the QoS classes comprise at least one class which guarantees that no packets of this class will be dropped should network congestion occur, and at least one class which guarantees that no more than a predetermined proportion of packets of this class will be dropped should network congestion occur.

3. A method of sending data packets through a MPLS network according to claim 1 or claim 2, in which the QoS classes comprise at least one class which guarantees that all packets of this class will be received within a predetermined delay, and at least one class which guarantees that no less than a predetermined proportion of packets of this class will be received within a predetermined delay.

4. A method of sending data packets through a MPLS network according to any preceding claim, in which
of a first class (GD_FEC) no packets shall be dropped and delay will be no more than a predetermined limit for 100% of the packets in the first class,
of a second class (DS_FEC) no more than a predetermined proportion of the packets of the second class shall be dropped and delay will be no more than a predetermined limit for a predetermined proportion of the packets in the second class,
of a third class (DIS_FEC) no more than a predetermined proportion of the packets of the third class shall be dropped but there is no limit set as possible delay, and
of a fourth class (BE_FEC) no limit is set either for the proportion of the packets which shall be dropped or for the delay of any packet of the fourth class.

5. A method of sending data packets through a MPLS network according to any preceding claim, in which for each packet the class is flagged in the EXP field of the MPLS header attached to the data packet, routing then being undertaken according to the E-LSP scheme.

6. A method of sending data packets through a MPLS network according to any of claims 1 to 4, in which for each packet the class is flagged in the label field of the MPLS header attached to the data packet, routing then being undertaken according to the L-LSP scheme.

7. A method of sending data packets through a MPLS network according to any preceding claim, in which the packets are DiffServ Internet Protocol IP packets, and the MPLS network is within a Universal Mobile Telephone Service network.

8. A Multiple Protocol Label Switching MPLS network comprising means to assign to each packet a quality of service class flag, and one or more routers operative to route each packet through the MPLS network dependent on the QoS class flag assigned.

9. A Universal Mobile Telecommunications System UMTS network comprising a MPLS network according to claim 8.

10. A UMTS network according to claim 9, in which the MPLS network comprising a MPLS bearer service manager operative to route the data packets between UMTS terrestrial radio access network (UTRAN) and core network edge node, and between core network edge node and gateway GPRS support node (GGSN).
